# EUROPÄISCHE PATENTSCHRIFT

(11) **EP 3 753 682 B1**
(45) Veröffentlichungstag und Bekanntmachung des Hinweises auf die Patenterteilung: **29.12.2021**
(21) Anmeldenummer: 19180605.8
(22) Anmeldetag: 17.06.2019
(51) Int. Cl.: B25J 9/16, G05B 13/04

(54) **VERFAHREN ZUR STEUERUNG EINES ANTRIEBSMOTORS**
METHOD OF CONTROLLING A DRIVE MOTOR
PROCÉDÉ DE COMMANDE D'UN MOTEUR D'ENTRAÎNEMENT

(43) Veröffentlichungstag der Anmeldung: 23.12.2020
(73) Patentinhaber: Schneider Electric Industries SAS, 92500 Rueil Malmaison (FR)
(72) Erfinder: Walter, Sebastian, 97828 Marktheidenfeld / Altfeld (DE); Hempel, Dirk, 97959 Assamstadt (DE)
(74) Vertreter: Manitz Finsterwald Patent- und Rechtsanwaltspartnerschaft mbB

(56) Entgegenhaltungen:
- EP-A1- 2 690 513
- EP-A1- 3 023 208
- WO-A1-2014/183930
- DE-A1-102004 019 352
- DE-B4-112012 007 053
- DESSAINT L-A ET AL: "An adaptive controller for a direct-drive SCARA robot: Analysis and simulation", SIGNAL PROCESSING AND SYSTEM CONTROL, FACTORY AUTOMATION. PACIFIC GROVE, NOV. 27 - 30, 1990; [PROCEEDINGS OF THE ANNUAL CONFERENCE OF THE INDUSTRIAL ELECTRONICS SOCIETY. (IECON)], NEW YORK, IEEE, US, Bd. CONF. 16, 27. November 1990 (1990-11-27), Seiten 414-420, XP010038172, DOI: 10.1109/IECON.1990.149176 ISBN: 978-0-87942-600-2

## Beschreibung

Die vorliegende Erfindung betrifft ein Verfahren zur Steuerung eines, insbesondere elektrischen, Antriebsmotors einer industriellen Maschine, bei welchem eine Antriebssteuerung den Antriebsmotor ansteuert und der Antriebsmotor eine Mechanik der Maschine mit einer oder mehreren gekoppelten Komponenten antreibt.

Bei industriellen Maschinen werden in der Regel elektrische Antriebsmotoren verwendet, die verschiedene Achsen der Maschine antreiben. Durch die Achsen werden wiederum Komponenten der Mechanik angetrieben, wodurch die Maschine im Betrieb ihre Aufgabe ausführt.

Beim Betrieb der Maschine können jeweils unterschiedliche Drehgeschwindigkeiten und Drehmomente von dem Antriebsmotor gefordert sein. Beispielsweise können die unterschiedlichen Drehmomente in Reaktion auf eine kurzfristig auftretende hohe Reibung oder eine Beschleunigung einer der Komponenten der Mechanik begründet sein. Nach Auftreten eines solchen Ereignisses reagiert die Antriebssteuerung und passt beispielsweise den Motorstrom oder die Motorleistung entsprechend an. Nichtsdestotrotz können durch solche Ereignisse der Gleichlauf und die Laufruhe des Motors beeinträchtigt werden, wodurch unerwünschte Kräfte in der Mechanik auftreten können.

Aus der DE 11 2012 007 053 B4 und der EP 3 023 208 A1 sind Verfahren gemäß dem Oberbegriff des Anspruchs 1 bekannt. Dessaint beschreibt in "An adaptive controller for a direct-drive SCARA robot: Analysis and simulation" (XP010038172) die Anpassung von Manipulator-Parametern. Die DE 10 2004 019 352 A1 beschreibt einen Prozessregler, dessen Prozessparameter einer Adaption unterzogen werden.

Die der Erfindung zugrunde liegende Aufgabe ist es, ein Verfahren zur Steuerung eines Antriebsmotors anzugeben, welches das Auftreten von Gleichlaufstörungen und/oder zusätzlichen Kräften in der Mechanik reduziert oder verhindert.

Diese Aufgabe wird erfindungsgemäß durch ein Verfahren gemäß Anspruch 1 gelöst.

Insbesondere wird die Aufgabe dadurch gelöst, dass die Antriebssteuerung eine Simulation der Mechanik der Maschine mittels eines Simulationsmodells durchführt und aufgrund der Simulation eine Vorsteuerung des Antriebsmotors vornimmt.

Die Erfindung setzt auf der Erkenntnis auf, dass durch das Simulationsmodell der Mechanik im Vorhinein die Bewegung der Mechanik simuliert werden kann. Bei der Simulation können dann im Vorhinein z.B. erhöhte Drehmomentanforderungen festgestellt werden. Wird eine solche erhöhte Drehmomentanforderung erkannt, kann eine Vorsteuerung des Antriebsmotors erfolgen, sodass die erhöhte Drehmomentanforderung keine negativen Auswirkungen auf die Laufruhe des Motors mit sich bringt oder dass keine unerwünschten zusätzlichen Kräfte in der Mechanik entstehen, welche z.B. den Verschleiß der Mechanik erhöhen.

Insbesondere kann die Antriebssteuerung mittels der in der Simulation berechneten (theoretischen) Werte eine Vorsteuerung durchführen. Durch einen Vergleich mit den an der Maschine tatsächlich gemessenen (realen) Werten können die theoretisch ermittelten Werte angepasst/verbessert werden. Insbesondere durch wiederholtes Vergleichen der theoretischen Werte mit den realen Werten lassen sich über die Lebenszeit einer industriellen Maschine Tendenzen feststellen, die Rückschlüsse auf mechanische Veränderungen zulassen. Somit können Modelle entwickelt werden, die Vorhersagen ermöglichen, welche mechanischen Bauteile zukünftig vermehrt fehler- und/oder verschleißanfällig sind oder sein können.

Die Simulation wird erfindungsgemäß von der Antriebssteuerung selbst durchgeführt (d.h. nicht von einem externen System), sodass keine zusätzlichen Komponenten notwendig sind. Ein weiterer Vorteil der Durchführung der Simulation in der Antriebssteuerung selbst ist, dass die bei der Simulation gewonnenen Daten direkt von der Antriebssteuerung weiterverarbeitet und für die Vorsteuerung des Antriebsmotors verwendet werden können.

Die Antriebssteuerung kann insbesondere eine Recheneinrichtung, beispielsweise eine speicherprogrammierbare Steuerung (SPS) umfassen, welche die Simulation durchführt und z.B. das Simulationsmodell speichert. Zudem kann die Antriebssteuerung Leistungsbauteile, insbesondere Leistungstransistoren, umfassen, welche den Antriebsmotor elektrisch ansteuern. Die Antriebssteuerung kann bevorzugt direkt mit dem Antriebsmotor verbunden sein, z.B. mittels elektrischer Anschlussleitungen. Insbesondere können die Komponenten der Antriebssteuerung in einem einzigen Gehäuse untergebracht sein.

Die Antriebssteuerung kann in der industriellen Maschine untergebracht sein. In der Maschine treibt der Antriebsmotor die Mechanik an, wobei die Mechanik eine oder mehrere gekoppelte Komponenten umfasst. Gekoppelt ist dabei als mechanisch und/oder antriebswirksam gekoppelt zu verstehen. Der Antriebsmotor kann eine der Komponenten der Mechanik sein. Beispielsweise kann der Antriebsmotor eine Antriebsachse antreiben, wobei die Antriebsachse wieder mit mehreren weiteren Komponenten, z.B. Schubstangen, Getrieben und dergleichen, gekoppelt sein kann. In dem Simulationsmodell können nun die Komponenten der Mechanik, also beispielsweise die Antriebsachse, die Schubstangen, Getriebe und dergleichen, datenmäßig hinterlegt sein und/oder simuliert werden.

Die Antriebssteuerung kann auch mehrere Antriebsmotoren ansteuern, welche wiederum separate Antriebsachsen antreiben. Die mehreren Antriebsmotoren und Achsen können von dem Simulationsmodell umfasst sein oder in separaten Simulationsmodellen abgebildet werden.

Vorteilhafte Weiterbildungen der Erfindung sind der Beschreibung, den Zeichnungen sowie den Unteransprüchen zu entnehmen.

Gemäß einer ersten vorteilhaften Ausführungsform umfasst das Simulationsmodell Informationen über die Struktur der Mechanik. Die Informationen über die Struktur der Mechanik werden bei der Simulation verwendet. Die Informationen können beispielsweise die Anzahl der Komponenten, die Masse, das Trägheitsmoment, die Position, etc. zumindest einer oder auch aller Komponenten umfassen.

Erfindungsgemäß umfasst das Simulationsmodell zumindest eine Übertragungsfunktion, welche das Verhalten zumindest eines Teils der Komponenten der Mechanik beschreibt. Erfindungsgemäß beschreibt die Übertragungsfunktion die Bewegung einer ersten Komponente in Abhängigkeit der Bewegung einer zweiten Komponente, welche mit der ersten Komponente gekoppelt ist. Aufgrund der Übertragungsfunktion ist es mit dem Simulationsmodell beispielsweise möglich, aus einer bekannten Drehung/Bewegung des Motors auf die Bewegung einer direkt oder indirekt mit dem Antriebsmotor gekoppelten Komponente rückzuschließen und die Bewegung der mit dem Antriebsmotor gekoppelten Komponente zu berechnen. Beispielsweise kann der Antriebsmotor über eine Kurbelstange einen Schlitten vor und zurück bewegen. Hierfür kann das Simulationsmodell eine entsprechende Übertragungsfunktion umfassen, sodass z.B. aus der Winkelposition, der Winkelgeschwindigkeit und/oder der Winkelbeschleunigung des Motors (bzw. der Motorwelle) die momentane Position, Geschwindigkeit und Beschleunigung des Schlittens ermittelt / berechnet werden können.

Überdies kann das Simulationsmodell auch weitere Übertragungsfunktionen umfassen, welche die Bewegung von weiteren Komponenten angeben. Insbesondere kann eine Kette von Übertragungsfunktionen zur Beschreibung der Bewegung sämtlicher Komponenten der Mechanik von dem Simulationsmodell umfasst sein. Insbesondere können sämtliche Komponenten der Mechanik zumindest indirekt miteinander gekoppelt sein, sodass die Bewegung einer Komponente der Mechanik zu Bewegungen der (sämtlichen) weiteren Komponenten der Mechanik führt.

Gemäß einer weiteren vorteilhaften Ausführungsform umfasst das Simulationsmodell eine, insbesondere jeweils separate, insbesondere virtuelle (datenmäßige), Repräsentation der Komponenten der Mechanik (oder auch aller Komponenten der Mechanik), wobei die Repräsentation bevorzugt wiederholt neu berechnet wird. Die Repräsentation einer Komponente im Simulationsmodell kann beispielsweise einen Wert oder mehrere Werte der Komponente umfassen, welche physikalische Größen wie die Geschwindigkeit v, die Beschleunigung a, die Position s, die Masse m, das Trägheitsmoment J, die Winkelbeschleunigung a, die Winkelgeschwindigkeit ω und/oder die Reibung R der Komponente beschreiben. Insbesondere kann während der Simulation basierend auf dem Simulationsmodell die Bewegung zumindest einer oder mehrerer der Komponenten berechnet werden, bevorzugt basierend auf einem der vorgenannten Werte. Die Bewegung und/oder die Repräsentation der Bewegung im Simulationsmodell kann dabei wiederholt neu berechnet werden, beispielsweise alle 0,5 Sekunden, alle 0,1 Sekunden, alle 0,01 Sekunden oder alle 0,001 Sekunden.

Gemäß einer weiteren vorteilhaften Ausführungsform wird das Simulationsmodell basierend auf einem sekundären Simulationsmodell erstellt und/oder von dem sekundären Simulationsmodell mit Daten versorgt. Das sekundäre Simulationsmodell kann außerhalb der Antriebssteuerung erzeugt und ausgeführt werden. Insbesondere ist das sekundäre Simulationsmodell umfangreicher und genauer als das Simulationsmodell in der Antriebssteuerung. Beispielsweise kann das sekundäre Simulationsmodell mit einer Software wie *industrialPhysics* erstellt und/oder ausgeführt werden.

Gemäß einer weiteren vorteilhaften Ausführungsform umfasst das Simulationsmodell oder das sekundäre Simulationsmodell einen digitalen Zwilling der Maschine. Der digitale Zwilling ("digital Twin") kann beispielsweise mit Hilfe einer Software wie *industrialPhysics* auf Basis des Designs der Maschine erstellt werden. Bei dem digitalen Zwilling kann es sich um ein digitales Modell der Maschine handeln, welches während des gesamten Lebenszyklus der Maschine zur Verfügung steht. Der digitale Zwilling oder auch das Simulationsmodell und/oder das sekundäre Simulationsmodell können aus einem Maschinen-Projekt generiert werden, sodass die Erstellung mit nur geringem Aufwand verbunden ist. Bei dem Maschinen-Projekt kann es sich um ein Projekt aus einer Projektierungssoftware (z.B. einer CAD-Software) für die Maschine handeln. In der Projektierungssoftware können die Funktion und die Anordnung der Komponenten jeweils festgelegt und dargestellt werden.

Insbesondere werden bei der Simulation mathematische Berechnungen basierend auf dem Simulationsmodell von der Antriebssteuerung durchgeführt.

Gemäß einer weiteren vorteilhaften Ausführungsform wird das Simulationsmodell und/oder das sekundäre Simulationsmodell, wie oben bereits erwähnt, aus einem CAD-Modell der Maschine erstellt. Hierdurch kann die Erstellung des Simulationsmodells vereinfacht und beschleunigt werden, da in dem CAD-Modell viele oder alle Daten zur Maschine bereits vorhanden sind und somit lediglich in das Simulationsmodell überführt werden müssen. Die Überführung in das Simulationsmodell kann durch einen vorgegebenen Transformations-Algorithmus vorgenommen werden. Bei dem CAD-Modell kann es sich insbesondere um ein dreidimensionales Modell der Maschine handeln.

Gemäß einer weiteren vorteilhaften Ausführungsform wird die Simulation während des Betriebs der Maschine bevorzugt in Echtzeit durchgeführt. In Echtzeit bedeutet dabei, dass die Simulation zumindest genauso schnell erfolgt, wie der tatsächliche Betrieb der Maschine ist. Insbesondere kann die Simulation jeweils den Zustand der Maschine simulieren, da jeder mechanische Zustand der Simulation bekannt ist. Somit kann in Echtzeit die erforderliche Vorsteuerung des Antriebsmotors ermittelt und vorgenommen werden. Beispielsweise kann bei der Simulation erkannt werden, dass in Kürze eine erhöhte Last am Antriebsmotor anliegen wird. Im Zuge der Vorsteuerung kann daraufhin das vom Antriebsmotor an die Mechanik abgegebene Drehmoment rechtzeitig erhöht werden.

Insbesondere kann die Simulation den tatsächlichen Zustand der Maschine in Echtzeit berechnen und/oder dem tatsächlichen Zustand voraus sein, insbesondere um zumindest 10 ms, oder um zumindest 5 ms, oder um zumindest 1 ms, maximal um beispielsweise 100 ms. Zudem kann die Simulation mit dem tatsächlichen Zustand der Maschine synchronisiert werden, insbesondere durch Messung des tatsächlichen Drehmomentenbedarfs des Antriebsmotors. Mittels der Übertragungsfunktion der Mechanik kann beispielsweise die Geschwindigkeit v, die Beschleunigung a, die Position s, die Winkelbeschleunigung a, die Winkelgeschwindigkeit ω und/oder die Winkelposition x einer oder mehrerer Komponenten bestimmt werden. Zusätzlich ist es durch den gemessenen Momentenbedarf hierbei möglich, mechanische Parameter wie das mechanische Trägheitsmoment, die geschwindigkeitsabhängige Reibung und/oder die statische Reibung einer oder aller Komponenten der Mechanik zu ermitteln, wie in der EP 19180500.1 erläutert ist.

Bei der Simulation kann also ein zukünftiger erforderlicher Kraft- und/oder Drehmomentbedarf bzw. ein in Echtzeit erwarteter Kraft- und/oder Drehmomentbedarf des Antriebsmotors berechnet werden. Entsprechend dem berechneten Kraft- und/oder Drehmomentbedarf kann dann die Vorsteuerung erfolgen.

Gemäß einer weiteren vorteilhaften Ausführungsform wird die Simulation mit Programmcode der Antriebssteuerung durchgeführt. Dies bedeutet, die Simulation wird aus dem Code heraus durchgeführt, der auch für die reguläre Steuerung des Antriebsmotors durch die Antriebssteuerung verwendet wird. Beispielsweise kann das Simulationsmodell in einer Bibliothek (Library) des Codes der Antriebssteuerung gespeichert sein. Dadurch entfällt die Notwendigkeit einer separaten Software für die Simulation der Maschine. Zudem können die bei der Simulation erzeugten Daten im selben Programmcode weiterverarbeitet und für die Vorsteuerung der Maschine verwendet werden. Hierdurch lässt sich die Vorsteuerung sehr einfach realisieren und unterliegt zudem nur geringen Latenzen, da keine Datenübertragung zwischen verschiedenen Steuereinheiten o.ä. notwendig ist.

Gemäß einer weiteren vorteilhaften Ausführungsform ist die Antriebssteuerung in eine Kopfsteuerung und eine Motorsteuerung gegliedert, wobei die Simulation und die Vorsteuerung von der Kopfsteuerung durchgeführt werden. Die Kopfsteuerung kann beispielsweise durch die vorgenannte SPS gebildet werden, wohingegen die Motorsteuerung durch einen Leistungsteil (mit den vorgenannten Leistungstransistoren) der Antriebssteuerung gebildet wird. Die Motorsteuerung kann beispielsweise Positions- und/oder Drehzahl- und/oder Drehmomentanforderungen von der Kopfsteuerung empfangen und diese umsetzen. Hierzu kann die Motorsteuerung beispielsweise einen PID-Regler umfassen.

Gemäß einer weiteren vorteilhaften Ausführungsform kann die Simulation zur Auslegung und/oder Auswahl des Motors herangezogen werden, wobei die Simulation insbesondere vor der Maschineninbetriebnahme in der Antriebssteuerung ausgeführt wird. Durch die Simulation kann beispielsweise eine Drehmomentanforderung an den Antriebsmotor für jeden möglichen Betriebszustand der Maschine vor der Inbetriebnahme oder sogar vor dem Aufbau der Maschine bestimmt werden. Dadurch ist dann eine geeignete Auslegung und/oder Auswahl des Antriebsstrangs (Kombination aus Antriebssteuerung, Motor und Getriebe) möglich. Es ist also von Vorteil, dass die benötigte Leistungsfähigkeit bzw. Größe des Antriebsstrangs, insbesondere bei Maschinen mit einer komplexen Mechanik basierend auf der Simulation auf Basis belastbarer Daten ausgewählt werden kann. Zu groß dimensionierte und damit zu teure Antriebsstränge oder Antriebsmotoren werden hierdurch vermieden.

Bei der Recheneinrichtung des Maschinen-Projekts kann es sich um einen Computer handeln, auf welchem eine CAD-Software für das Maschinen-Projekt ausgeführt wird. Aus der CAD-Software des Maschinen-Projekts kann dann das Simulationsmodell und/oder das sekundäre Simulationsmodell erzeugt werden, beispielsweise mit der Software *industrialPhysics.* Hierzu überträgt die CAD-Software z.B. ihre CAD-Daten an *industrialPhysics.* Basierend auf den CAD-Daten kann dementsprechend eine Simulation des sekundären Simulationsmodells ausgeführt werden, wodurch die industrielle Maschine simuliert wird. Die Simulation des sekundären Simulationsmodells kann von der Recheneinrichtung des Maschinen-Projekts oder einer anderen Recheneinrichtung ausgeführt werden. Vor Inbetriebnahme der industriellen Maschine können die Daten des sekundären Simulationsmodells dann teilweise oder vollständig an die Antriebssteuerung übertragen werden.

Auch mittels des sekundären Simulationsmodells kann die Simulation zur Auslegung und/oder Auswahl des Motors dann noch vor der Inbetriebnahme der industriellen Maschine vorgenommen werden.

Genauer gesagt, können insbesondere vor oder während der Inbetriebnahme der Maschine (d.h. in einer Initialisierungsphase) die Recheneinrichtung des Maschinen-Projekts und die Antriebssteuerung mittels einer Datenverbindung gekoppelt werden. Die Antriebssteuerung kann dann, z.B. mittels eines Bewegungs-Sollwert-Generators, den Verlauf der Bewegungen des Antriebsmotors (oder von mehreren Antriebsmotoren) simulieren. Hierzu kann die Antriebssteuerung ein Ablaufprogramm, welches den späteren Betrieb der Maschine steuert, abarbeiten und mittels des Bewegungs-Sollwert-Generators zu einer Vielzahl von Zeitpunkten die jeweiligen Winkelpositionen, Winkelgeschwindigkeiten und/oder Winkelbeschleunigungen des Antriebsmotors oder der Antriebsmotoren ausgeben. Auf diese Weise können durch den Bewegungs-Sollwert-Generator z.B. Bewegungsprofile nachgestellt werden, ohne dass der Antriebsmotor tatsächlich angesteuert wird.

Die mittels des Bewegungs-Sollwert-Generators zu einer Vielzahl von Zeitpunkten ermittelten Daten zu Winkelpositionen, Winkelgeschwindigkeiten und/oder Winkelbeschleunigungen werden dann in das sekundäre Simulationsmodell eingespeist. Das sekundäre Simulationsmodell verfügt damit nicht nur über die CAD-Daten, sondern auch über die im Betrieb der Maschine zu erwartenden Bewegungen. Es wird dann bevorzugt eine vollständige Simulation der Maschine mittels des sekundären Simulationsmodells durchgeführt.

Insbesondere wird mittels des sekundären Simulationsmodells die Simulation der Bewegungen der Komponenten der Mechanik durchgeführt, wobei die bei dieser Simulation gewonnenen Bewegungsgrößen und/oder gewonnene mechanische Parameter an die Antriebssteuerung übertragen werden können.

Bevorzugt generiert die Antriebssteuerung aus den Bewegungsgrößen eine oder mehrere Übertragungsfunktionen der Mechanik der Maschine. Das Simulationsmodell der Antriebssteuerung wird also basierend auf den Daten der Simulation des sekundären Simulationsmodells vervollständigt oder erzeugt.

Bevorzugt wird eine Übertragungsfunktion in der Antriebssteuerung in Form einer Wertetabelle von Wertepaaren gespeichert, insbesondere in der genannten Library. Die Wertepaare geben jeweils die Bewegungsgröße einer antreibenden Komponente und die zugehörige Bewegungsgröße einer angetriebenen Komponente an. Die Wertetabelle der Wertepaare einer mechanischen Komponente repräsentiert die Übertragungsfunktion der Komponente. Auf Basis der Wertepaare / Übertragungsfunktion können im Betrieb schnell die benötigten Bewegungsgrößen ermittelt werden. Zudem wird durch die Wertetabelle wenig Speicherplatz in der Antriebssteuerung verbraucht. Beispielsweise kann die Wertetabelle zumindest 20 Wertepaare oder bis zu 36 Wertepaare, oder bis zu 500 oder 2600 Wertepaare umfassen.

Alternativ kann das sekundäre Simulationsmodell komplett an die Antriebssteuerung übertragen werden und danach von der Antriebssteuerung zur Durchführung der Simulation genutzt werden.

In einer der Initialisierungsphase nachfolgenden Betriebsphase besteht bevorzugt keine Datenverbindung zwischen der Antriebssteuerung und der Recheneinrichtung des Maschinen-Projekts und/oder der Recheneinrichtung, welche das sekundäre Simulationsmodell ausführt. Das Simulationsmodell der Antriebssteuerung und das sekundäre Simulationsmodell tauschen dementsprechend keine Daten aus. In der Betriebsphase kann die Maschine ihren Regelbetrieb durchführen und z.B. das genannte Ablaufprogramm tatsächlich ausführen.

In der Betriebsphase führt die Antriebssteuerung die Simulation der Maschine mittels des Simulationsmodells durch und nimmt anhand der Ergebnisse der Simulation eine Vorsteuerung des Antriebsmotors vor, wie hierin beschrieben.

Gemäß einer weiteren vorteilhaften Ausführungsform werden bei der Inbetriebnahme und/oder während des Betriebs (d.h. in der Betriebsphase) der Maschine Messungen von Parametern der Komponenten der Mechanik vorgenommen, woraufhin das Simulationsmodell und/oder das sekundäre Simulationsmodell bevorzugt mit den gemessenen Parametern aktualisiert werden. Unter den ermittelten oder gemessenen Parametern sind z.B. die oben erwähnten Bewegungsgrößen und/oder mechanische Parameter der Komponenten der Mechanik zu verstehen. Eine Bewegungsgröße gibt beispielsweise eine Geschwindigkeit, eine Beschleunigung oder eine Position einer Komponente der Mechanik an. Unter einem mechanischen Parameter ist insbesondere ein Drehmoment, eine Kraft und/oder eine Konstante zur Berechnung eines Drehmoments oder einer Kraft basierend z.B. auf einer Beschleunigung oder Geschwindigkeit zu verstehen.

Insbesondere erfolgen eine Messung des vom Antriebsmotor an die Mechanik abgegebenen Drehmoments und zusätzlich eine Ermittlung und/oder Messung der jeweiligen Winkelposition des Antriebsmotors. Aus der Winkelposition kann dann eine Winkelbeschleunigung und eine Winkelgeschwindigkeit des Antriebsmotors berechnet werden. Aus der Winkelposition des Antriebsmotors können zudem mithilfe der Übertragungsfunktionen von mechanischen Komponenten die jeweiligen Positionen, Geschwindigkeiten und Beschleunigungen der übrigen Komponenten der Mechanik berechnet werden. Aus den derart bekannten Geschwindigkeiten, Beschleunigungen und Positionen der Komponenten können mithilfe der Messung des vom Antriebsmotor an die Mechanik abgegebenen Drehmoments zudem die von den einzelnen Komponenten erzeugten Kräfte und/oder Drehmomente bestimmt werden. Hierzu können insbesondere wiederholt Messungen durchgeführt werden. Auf Basis der physikalischen Beziehungen zwischen Bewegungs-Größen und mechanischen Parametern unter Beachtung der Übertragungsfunktionen der mechanischen Komponenten wird dann ein Gleichungssystem aufgestellt, welches z.B. eine Gleichung pro Messung umfasst. Das Gleichungssystem umfasst bevorzugt gleich viele oder mehr Gleichungen als Unbekannte und kann daher gelöst werden. Dies ist detailliert in der europäischen Patentanmeldung EP 19180500.1 derselben Anmelderin ausgeführt. Die Offenbarung der europäischen Patentanmeldung EP 19180500.1 wird hiermit vollumfänglich und insbesondere bezüglich der Berechnung der mechanischen Parameter der Mechanik durch Bezugnahme in die vorliegende Offenbarung mit eingeschlossen.

Genauer gesagt kann die Antriebssteuerung in der Betriebsphase fortlaufend Messungen der Parameter durchführen. Die gemessenen Parameter können in der Antriebssteuerung gespeichert werden. Nach vorbestimmten Zeitintervallen, im Wartungsfall und/oder bei einer Veränderung zumindest eines gemessenen Parameters um mehr als einen Toleranzwert kann wieder in die Initialisierungsphase zurückgekehrt werden, d.h. die Antriebssteuerung kann wieder mit der Recheneinrichtung, auf der die sekundäre Simulation läuft, gekoppelt werden. Die gemessenen und gespeicherten Parameter können dann an das Maschinen-Projekt übertragen werden, woraufhin das sekundäre Simulationsmodell basierend auf den gemessenen Parametern aktualisiert und/oder verbessert wird. Anschließend kann, wie oben beschrieben, dann erneut eine Simulation des aktualisierten sekundären Simulationsmodells durchgeführt werden, wobei die Übertragungsfunktionen in der Antriebssteuerung aktualisiert werden. Auf diese Weise wird also auch das Simulationsmodell in der Antriebssteuerung aktualisiert. Danach kann wieder in die Betriebsphase übergegangen werden, in der, wie schon gesagt, die Antriebssteuerung vom sekundären Simulationsmodell entkoppelt ist.

Gemäß einer weiteren vorteilhaften Ausführungsform wird das Simulationsmodell jeweils nach einem vorbestimmten Zeitintervall und/oder nach einem vorbestimmten Ereignis aktualisiert. Wie oben bereits angedeutet, kann das Simulationsmodell nach einer vorbestimmten Anzahl von Betriebsstunden aktualisiert werden, wobei nach der vorbestimmten Anzahl von Betriebsstunden z.B. Messungen an der Maschine vorgenommen werden, um das Simulationsmodell zu aktualisieren. Insbesondere können vor der Aktualisierung die Parameterwerte gemäß dem Simulationsmodell und die entsprechenden realen Messwerte verglichen und auf diese Weise mechanische Veränderungen identifiziert werden. Darüber hinaus kann jeweils ein Satz von ermittelten Parametern gespeichert und aus dessen zeitlichem Verlauf Rückschlüsse für zukünftiges mechanischen Verhalten gezogen werden, z.B. im Hinblick auf Verschleiß.

Bei dem genannten Ereignis kann es sich beispielsweise um eine Wartung, den Austausch einer Komponente und/oder das Entfernen oder Hinzufügen von mechanischen Komponenten handeln. Hierbei kann das Simulationsmodell z.B. ohne Messung entsprechend angepasst werden. Ebenfalls ist es möglich, Messungen durchzuführen, um die Auswirkungen des Ereignisses genauer bestimmen zu können.

Weiterer Gegenstand der Erfindung ist eine industrielle Maschine gemäß Anspruch 14.

Die industrielle Maschine kann beispielsweise zur Werkstückbearbeitung und/oder zum Sortieren und Befördern von Gegenständen ausgebildet sein.

Die zu dem erfindungsgemäßen Verfahren getroffenen Aussagen gelten für die erfindungsgemäße industrielle Maschine entsprechend. Dies gilt insbesondere hinsichtlich Vorteilen und bevorzugten Ausführungsformen.

Nachfolgend wird die Erfindung rein beispielhaft unter Bezugnahme auf die Zeichnungen beschrieben. Es zeigen:
Fig. 1: den schematischen Aufbau einer Maschine;
Fig. 2: schematisch die Erstellung eines Simulationsmodells;
Fig. 3: schematisch die Verwendung des Simulationsmodells während des Betriebs der Maschine.

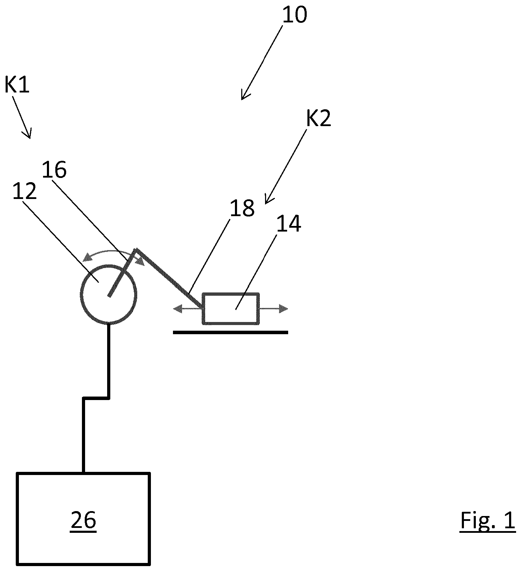

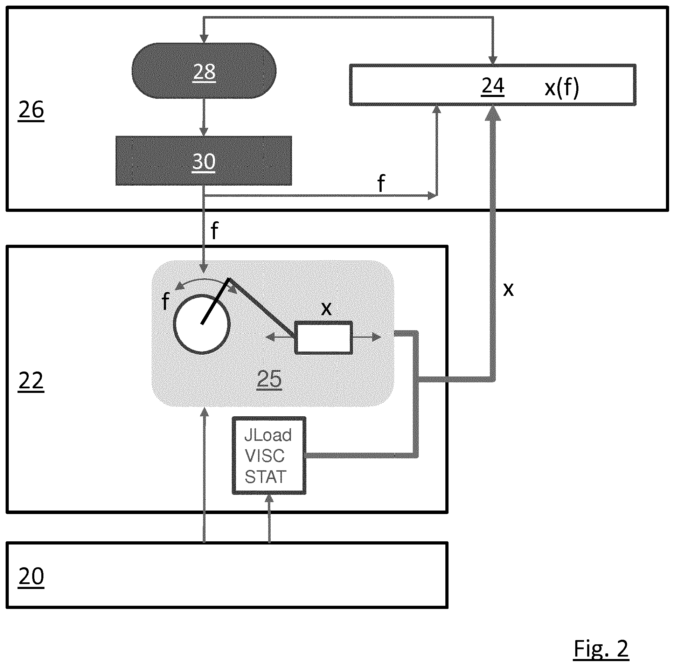

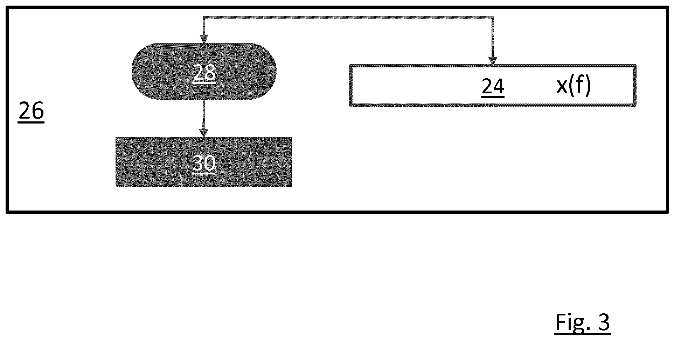

Fig. 1 zeigt eine Maschine 10, bei welcher ein Motor 12 einen Schlitten 14 hin und her bewegt. Der Motor 12 treibt hierfür eine Kurbel 16 an, welche über eine Schubstange 18 wiederum den Schlitten 14 bewegt. Der Motor 12 wird von einer Antriebssteuerung 26 (siehe Fig. 2 und Fig. 3) angesteuert.

Der Motor 12 zusammen mit der Kurbel 16 wird dabei als erste Komponente K1 und der Schlitten 14 zusammen mit der Schubstange 18 als zweite Komponente K2 angesehen.

Der hier gezeigte Aufbau der Maschine 10 ist rein exemplarisch und dient nur der Verdeutlichung der Erstellung des Simulationsmodells. Das Simulationsmodell kann dabei auch für deutlich komplexere Maschinen 10 mit einer Vielzahl von Komponenten erstellt werden.

Fig. 2 zeigt das Vorgehen zur Erstellung eines Simulationsmodells, d.h. die Initialisierungsphase. Hierzu wird mit einer CAD-Software 20 ein dreidimensionales Modell der Maschine 10 erzeugt. Das dreidimensionale Modell wird an eine Simulationsumgebung 22 (z.B. *industrialPhysics*) übergeben.

In der Simulationsumgebung wird aus dem dreidimensionalen Modell zunächst ein sekundäres Simulationsmodell 25 erzeugt.

Die Simulationsumgebung 22 ist in der Initialisierungsphase mit der Antriebssteuerung 26 gekoppelt. In der Initialisierungsphase arbeitet die Antriebssteuerung 26 ein Ausführungsprogramm 28 mittels eines Bewegungs-Sollwert-Generators (nicht gezeigt) ab. Der Bewegungs-Sollwert-Generator liefert wiederholt die (simulierte) Winkelposition f der Antriebsachse des Motors 12 an die Simulationsumgebung 22. Aus der Winkelposition f berechnet die Simulationsumgebung 22 mittels des sekundären Simulationsmodell 25 die jeweilige Position x des Schlittens 14.

Die Position x des Schlittens 14 wird dann an die Antriebssteuerung 26 übertragen, wobei die Antriebssteuerung 26 aus der Winkelposition f und der Position x des Schlittens eine Übertragungsfunktion x(f) erzeugt, welche dann Teil eines Simulationsmodells 24 ist. Die Übertragungsfunktion x(f) wird als Wertetabelle mit einer Vielzahl von Wertepaaren (f und x) in der Antriebssteuerung 26 gespeichert.

In der Simulationsumgebung 22 werden zudem mechanische Parameter der Mechanik der Maschine 10 bereitgestellt bzw. berechnet. Hierbei können beispielsweise das vom Motor 12 insgesamt zu überwindende Trägheitsmoment (JLoad), das vom Motor 12 zu überwindende geschwindigkeitsabhängige Drehmoment (VISC) und das vom Motor zu überwindende statische Drehmoment (STAT) bestimmt werden. Aus der Übertragungsfunktion x(f) und den ermittelten bzw. angegebenen Parametern bildet die Antriebssteuerung 26 das Simulationsmodell 24. Die dazu benötigten Daten werden aus dem sekundären Simulationsmodell 25 von der Simulationsumgebung 22 beispielsweise mittels einer Datenleitung übertragen.

Die Verwendung des Simulationsmodells 24 im Betrieb ist in Fig. 3 gezeigt. Fig. 3 zeigt also die Betriebsphase. Im Betrieb der Maschine 10 besteht keine Verbindung zwischen der Antriebssteuerung 26 und der Simulationsumgebung 22, sondern das Simulationsmodell 24 wird allein von der Antriebssteuerung 26 ausgeführt. Dabei greift ein Ausführungsprogramm 28 auf das Simulationsmodell 24 zu und führt eine Simulation basierend auf dem Simulationsmodell 24 aus. Aufgrund der bei der Simulation gewonnenen Daten, z.B. eines vom Motor 12 aufzubringenden / bereitzustellenden Drehmoments, führt das Ausführungsprogramm 28 eine Vorsteuerung 30 des Motors 12 aus, um so ein verbessertes Laufverhalten des Motors 12 zu erzielen.

Zudem kann das Simulationsmodell 24 und auch das sekundäre Simulationsmodell 25 noch durch Messungen an der Maschine 10 aktualisiert und/oder verbessert werden. Zu diesem Zweck können die Simulationsumgebung 22 und die Antriebssteuerung 26 wieder miteinander gekoppelt werden, wie in Fig. 2 gezeigt. Die Verbesserung und/oder Aktualisierung kann auch in der Antriebssteuerung 26 selbst vorgenommen werden. Alternativ oder zusätzlich kann die Verbesserung und/oder Aktualisierung auch in der Simulationsumgebung 22 erfolgen, hierzu können die Messungen von der Antriebssteuerung 26 an die Simulationsumgebung 22 übertragen werden, wie in Fig. 2 durch einen Pfeil dargestellt.

### Bezuqszeichenliste

- 10: Maschine
- 12: Motor
- 14: Schlitten
- 16: Kurbel
- 18: Schubstange
- 20: CAD-Software
- 22: Simulationsumgebung
- 24: Simulationsmodell
- 25: sekundäres Simulationsmodell
- 26: Antriebssteuerung
- 28: Ausführungsprogramm
- 30: Vorsteuerung
- K1: erste Komponente
- K2: zweite Komponente
- f: Motorbewegung
- x(f): Übertragungsfunktion

## Patentansprüche

1. Verfahren zur Steuerung eines, insbesondere elektrischen, Antriebsmotors (12) einer industriellen Maschine (10), bei welchem eine Antriebssteuerung (26) den Antriebsmotor (12) ansteuert und der Antriebsmotor (12) eine Mechanik mit einer oder mehreren gekoppelten Komponenten (K1, K2) antreibt,
wobei die Antriebssteuerung (26) eine Simulation der Mechanik der Maschine (10) mittels eines Simulationsmodells (24) durchführt und aufgrund der Simulation eine Vorsteuerung des Antriebsmotors (12) vornimmt,
**dadurch gekennzeichnet, dass**
das Simulationsmodell (24) zumindest eine Übertragungsfunktion umfasst, welche das Verhalten zumindest eines Teils der Komponenten (K1, K2) der Mechanik beschreibt, wobei die Übertragungsfunktion die Bewegung einer ersten Komponente (K1) in Abhängigkeit der Bewegung einer zweiten Komponente (K2), welche mit der ersten Komponente (K1) gekoppelt ist, beschreibt.

2. Verfahren nach Anspruch 1,
wobei das Simulationsmodell (24) Informationen über die Struktur der Mechanik umfasst.

3. Verfahren nach einem der vorstehenden Ansprüche,
wobei das Simulationsmodell (24) eine Repräsentation der Komponenten (K1, K2) der Mechanik umfasst, wobei die Repräsentation bevorzugt wiederholt neu berechnet wird.

4. Verfahren nach einem der vorstehenden Ansprüche,
wobei das Simulationsmodell (24) basierend auf einem sekundären Simulationsmodell (25) erstellt und/oder von dem sekundären Simulationsmodell (25) mit Daten versorgt wird.

5. Verfahren nach Anspruch 4,
wobei das sekundäre Simulationsmodell (25) außerhalb der Antriebssteuerung (26) erzeugt und/oder ausgeführt wird.

6. Verfahren nach einem der vorstehenden Ansprüche,
wobei das Simulationsmodell (24) aus einem CAD-Modell der Maschine (10) erstellt wird.

7. Verfahren nach einem der vorstehenden Ansprüche,
wobei die Simulation während des Betriebs der Maschine (10) in Echtzeit durchgeführt wird.

8. Verfahren nach einem der vorstehenden Ansprüche,
wobei bei der Simulation ein in Echtzeit erwarteter Kraft- und/oder Drehmomentbedarf des Antriebsmotors (12) berechnet wird.

9. Verfahren nach einem der vorstehenden Ansprüche,
wobei die Simulation mit Programmcode der Antriebssteuerung (26) durchgeführt wird.

10. Verfahren nach einem der vorstehenden Ansprüche,
wobei die Antriebssteuerung (26) in eine Kopfsteuerung und eine Motorsteuerung gegliedert ist, wobei die Simulation und die Vorsteuerung von der Kopfsteuerung durchgeführt werden.

11. Verfahren nach einem der vorstehenden Ansprüche,
wobei die Simulation zur Auslegung und/oder Auswahl des Antriebsmotors (12) herangezogen wird.

12. Verfahren nach einem der vorstehenden Ansprüche,
wobei bei der Inbetriebnahme und/oder während des Betriebs der Maschine (10) Messungen von Parametern der Komponenten (K1, K2) der Mechanik vorgenommen werden, woraufhin das Simulationsmodell (24) mit den gemessenen Parametern aktualisiert wird.

13. Verfahren nach einem der vorstehenden Ansprüche,
wobei das Simulationsmodell (24) jeweils nach einem vorbestimmten Zeitintervall und/oder nach einem vorbestimmten Ereignis aktualisiert wird.

14. Industrielle Maschine (10), mit einem, insbesondere elektrischen, Antriebsmotor (12), einer Mechanik mit einer oder mehreren Komponenten (K1, K2), einer Antriebssteuerung (26), wobei die Antriebssteuerung (26) den Antriebsmotor (12) ansteuert und der Antriebsmotor (12) die Mechanik antreibt,
wobei die Antriebssteuerung (26) ausgebildet ist, eine Simulation der Mechanik der Maschine (10) mittels eines Simulationsmodells (24) auszuführen und aufgrund der Simulation eine Vorsteuerung des Antriebsmotors (12) vorzunehmen,
**dadurch gekennzeichnet, dass**
das Simulationsmodell (24) zumindest eine Übertragungsfunktion umfasst, welche das Verhalten zumindest eines Teils der Komponenten (K1, K2) der Mechanik beschreibt, wobei die Übertragungsfunktion die Bewegung einer ersten Komponente (K1) in Abhängigkeit der Bewegung einer zweiten Komponente (K2), welche mit der ersten Komponente (K1) gekoppelt ist, beschreibt.

## Claims

1. A method of controlling a drive motor (12), in particular an electric drive motor (12), of an industrial machine (10), in which method a drive control (26) controls the drive motor (12) and the drive motor (12) drives a mechanical system having one or more coupled components (K1, K2), wherein the drive control (26) carries out a simulation of the mechanical system of the machine (10) by means of a simulation model (24) and performs a feedforward control of the drive motor (12) based on the simulation,
**characterized in that**
the simulation model (24) comprises at least one transfer function which describes the behavior of at least some of the components (K1, K2) of the mechanical system, with the transfer function describing the movement of a first component (K1) in dependence on the movement of a second component (K2) which is coupled to the first component (K1).

2. A method in accordance with claim 1,
wherein the simulation model (24) comprises information on the structure of the mechanical system.

3. A method in accordance with one of the preceding claims,
wherein the simulation model (24) comprises a representation of the components (K1, K2) of the mechanical system, with the representation preferably being recalculated repeatedly.

4. A method in accordance with any one of the preceding claims,
wherein the simulation model (24) is created on the basis of a secondary simulation model (25) and/or is supplied with data from the secondary simulation model (25).

5. A method in accordance with claim 4,
wherein the secondary simulation model (25) is generated and/or executed outside the drive control (26).

6. A method in accordance with any one of the preceding claims,
wherein the simulation model (24) is created from a CAD model of the machine (10).

7. A method in accordance with any one of the preceding claims,
wherein the simulation is carried out in real time during the operation of the machine (10).

8. A method in accordance with any one of the preceding claims,
wherein a force requirement and/or a torque requirement of the drive motor (12) expected in real time is/are calculated in the simulation.

9. A method in accordance with any one of the preceding claims,
wherein the simulation is carried out using the program code of the drive control (26).

10. A method in accordance with any one of the preceding claims,
wherein the drive control (26) is divided into a head control and a motor control, with the simulation and the feedforward control being carried out by the head control.

11. A method in accordance with any one of the preceding claims,
wherein the simulation is used for designing and/or selecting the drive motor (12).

12. A method in accordance with any one of the preceding claims,
wherein measurements of parameters of the components (K1, K2) of the mechanical system are performed on the putting into operation and/or during the operation of the machine (10), whereupon the simulation model (24) is updated with the measured parameters.

13. A method in accordance with any one of the preceding claims,
wherein the simulation model (24) is in each case updated after a predetermined time interval and/or after a predetermined event.

14. An industrial machine (10) comprising a drive motor (12), in particular an electric drive motor (12), a mechanical system having one or more components (K1, K2), and a drive control (26), wherein the drive control (26) controls the drive motor (12) and the drive motor (12) drives the mechanical system,
wherein the drive control (26) is configured to execute a simulation of the mechanical system of the machine (10) by means of a simulation model (24) and to perform a feedforward control of the drive motor (12) based on the simulation,
**characterized in that**
the simulation model (24) comprises at least one transfer function which describes the behavior of at least some of the components (K1, K2) of the mechanical system, with the transfer function describing the movement of a first component (K1) in dependence on the movement of a second component (K2) which is coupled to the first component (K1).

## Revendications

1. Procédé pour commander un moteur d'entraînement (12), en particulier électrique, d'une machine industrielle (10), dans lequel un contrôleur d'entraînement (26) pilote le moteur d'entraînement (12), et le moteur d'entraînement (12) entraîne un système mécanique ayant un ou plusieurs composants couplés (K1, K2),
dans lequel
le contrôleur d'entraînement (26) met en oeuvre une simulation du système mécanique de la machine (10) au moyen d'un modèle de simulation (24) et effectue une commande pilote du moteur d'entraînement (12) sur la base de la simulation,
**caractérisé en ce que**
le modèle de simulation (24) inclut au moins une fonction de transfert qui décrit le comportement d'une partie au moins des composants (K1, K2) du système mécanique, la fonction de transfert décrivant le mouvement d'un premier composant (K1) en fonction du mouvement d'un second composant (K2) couplé au premier composant (K1).

2. Procédé selon la revendication 1,
dans lequel le modèle de simulation (24) inclut des informations sur la structure du système mécanique.

3. Procédé selon l'une des revendications précédentes,
dans lequel le modèle de simulation (24) inclut une représentation des composants (K1, K2) du système mécanique, la représentation étant de préférence recalculée de manière répétée.

4. Procédé selon l'une des revendications précédentes,
dans lequel le modèle de simulation (24) est créé sur la base d'un modèle de simulation secondaire (25) et/ou est doté de données provenant du modèle de simulation secondaire (25).

5. Procédé selon la revendication 4,
dans lequel le modèle de simulation secondaire (25) est généré et/ou exécuté hors du contrôleur d'entraînement (26).

6. Procédé selon l'une des revendications précédentes,
dans lequel le modèle de simulation (24) est créé à partir d'un modèle CAO de la machine (10).

7. Procédé selon l'une des revendications précédentes,
dans lequel la simulation est mise en oeuvre en temps réel pendant le fonctionnement de la machine (10).

8. Procédé selon l'une des revendications précédentes,
dans lequel un besoin de puissance et/ou de couple attendu en temps réel du moteur d'entraînement (12) est calculé lors de la simulation.

9. Procédé selon l'une des revendications précédentes,
dans lequel la simulation est mise en œuvre avec un code de programme du contrôleur d'entraînement (26).

10. Procédé selon l'une des revendications précédentes,
dans lequel le contrôleur d'entraînement (26) est subdivisé en un contrôleur de tête et en un contrôleur de moteur, la simulation et la commande pilote étant mises en œuvre par le contrôleur de tête.

11. Procédé selon l'une des revendications précédentes,
dans lequel la simulation est utilisée pour la conception et/ou la sélection du moteur d'entraînement (12).

12. Procédé selon l'une des revendications précédentes,
dans lequel, pendant la mise en service et/ou pendant le fonctionnement de la machine (10), des mesures de paramètres des composants (K1, K2) du système mécanique sont effectuées, suite auxquelles le modèle de simulation (24) est mis à jour avec les paramètres mesurés.

13. Procédé selon l'une des revendications précédentes,
dans lequel le modèle de simulation (24) est mis à jour après un intervalle de temps prédéterminé et/ou après un événement prédéterminé.

14. Machine industrielle (10), comprenant un moteur d'entraînement (12), en particulier électrique, un système mécanique comportant un ou plusieurs composants (K1, K2), un contrôleur d'entraînement (26), le contrôleur d'entraînement (26) pilotant le moteur d'entraînement (12) et le moteur d'entraînement (12) entraînant le système mécanique,
le contrôleur d'entraînement (26) étant réalisé pour mettre en œuvre une simulation du système mécanique de la machine (10) au moyen d'un modèle de simulation (24) et pour effectuer une commande pilote du moteur d'entraînement (12) sur la base de la simulation,
**caractérisée en ce que**
le modèle de simulation (24) inclut au moins une fonction de transfert qui décrit le comportement d'une partie au moins des composants (K1, K2) du système mécanique, la fonction de transfert décrivant le mouvement d'un premier composant (K1) en fonction du mouvement d'un second composant (K2) couplé au premier composant (K1).
